# EUROPEAN PATENT SPECIFICATION

(11) **EP 1 419 812 B1**
(45) Date of publication and mention of the grant of the patent: **16.09.2015**
(21) Application number: 03024838.9
(22) Date of filing: 31.10.2003
(51) Int. Cl.: B01J 8/02

(54) **HIGH TEMPERATURE FIXED BED REACTOR AND ITS USE**
HOCHTEMPERATURREAKTOR MIT FESTBETT UND SEINE VERWENDUNG
RÉACTEUR À LIT FIXE DESTINÉ À DES RÉACTIONS À HAUTE TEMPÉRATURE ET SON UTILISATION

(30) Priority: 15.11.2002 DK 200201759
(43) Date of publication of application: 19.05.2004
(73) Proprietor: Haldor Topsøe A/S, 2800 Kgs. Lyngby (DK)
(72) Inventor: Hansen, Tommy, 3080 Tikob (DK); Ostberg, Martin, 4000 Roskilde (DK)

(56) References cited:
- DE-A- 3 040 712
- NL-C- 61 795
- US-A- 1 803 306
- US-A- 2 548 519
- US-A- 2 833 631

## Description

### BACKGROUND OF THE INVENTION

### Field of the Invention

This invention relates to a fixed bed reactor for high-temperature reactions, where the reactor is insulated on the inside of a pressure shell to keep a lower temperature of the shell material.

The invention is specifically directed to a reactor designed to avoid unintended chemical reactions at high gas temperatures.

### Description of Related Art

Chemical reactions releasing heat often take place at elevated temperatures and pressures in catalytic beds. The type of insulation used in corresponding reactors depends on the temperature inside the reactor and can be build either of fibre materials or of several layers of castable materials varying in insulation ability and temperature resistant. If castable materials are used, the outer layer will typically have very good properties for insulation, but on the expense of the temperature stability. Therefore, it is necessary to have inner layers with better temperature stability, but lower insulation abilities. Often the last inner layer consists of ceramic bricks with very high temperature stability. These can be made of alumina, zirconia or a mixture of these materials. If fibre materials are used there will typically only be one type, since these often posses good temperature stability and insulation properties at the same time.

The presence of a refractory lining or fibre insulation introduces reactor by-pass either because of the porosity of the refractory layers or because of imperfect construction having small gaps in the layer. These by-pass flows will be dependent on the pressure drop of the reactor, which in the case of a fixed bed of catalyst depends on flow through the reactor and the void of the catalyst. A by-pass may lead to undesired by-products formed in the reactor or even in the exit of the reactor.

US Patent No 1803306 A discloses a reactor useful in a process for the production of alcohols from carbon monoxide and hydrogen. The reactor includes a basket with a perforation lid for entrance, which however is not connected to the basket. The insulation material on the reactor is placed outside the reactor wall and electrical heating is placed in the insulation material and is thus outside the pressure shell.

NL Patent No 61795 C discloses a reactor having a basket surrounding the catalyst. However the basket is not connected to the inlet of the reactor wall and the inlet gasses flow along the outside of the basket.

US Patent No 2548519 A discloses a reactor whereby intrusion of gas through the insulation material is avoided by using an inert gas flow through the insulation. The reactor includes a reactor shell and a basket around a catalyst bed. The gas enters the reactor through the inlet nozzle which is a part of the reactor shell. The basket liner extends to the vertical part of the reactor shell. The basket is not connected to the inlet of the reactor shell.

DE Patent Application No 3040712 A discloses a reactor into which feed gas enters through an inlet opening which is not a channel. The inner vessel i.e. the basket is not connected to the inlet of the pressure vessel and there is thus no disclosure of a basket with an inlet channel connected to the inlet of the reactor shell.

### SUMMARY OF THE INVENTION

The invention is specifically directed to a reactor for processes involving reactions of gasses at high temperatures comprising a gas impermeable basket suitable for operation at elevated temperatures surrounded by a layer of insulation material, the insulation material being surrounded by a reactor shell suitable for operation at elevated pressures, wherein the basket comprises an inlet channel and a wall surrounding a fixed catalyst bed, and wherein the inlet channel is connected to the reactor shell forming a gas leak tight transfer for a feed gas.

This minimises or completely avoids the possibility of by-pass. Consequently, unintended reactions of feed gas bypassing the catalyst are avoided as well. An example is catalytic partial oxidation of a hydrocarbon feed, where bypass of the catalyst leads to thermal cracking instead of partial oxidation. The thermal cracking is furthermore ex-thermal.

Thereby, the invention makes it possible to use less expensive materials for the pressure shell and it decreases the necessary thickness of the shell meaning less material and cheaper reactor.

### BRIEF DESCRIPTION OF THE DRAWINGS

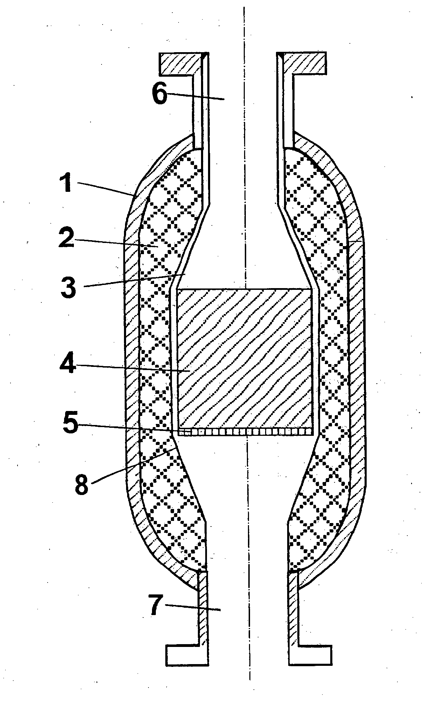

The sole figure is a schematic drawing of a preferred embodiment of the invention.

### DETAILED DESCRIPTION OF THE INVENTION

The invention provides a reactor design, where the possibility of by-pass is prevented in a fibre insulated or refractory lined reactor. In the following, reference to the figure is made. The reactor is build having an outer metallic pressure shell 1. This could be made of stainless steel or other similar construction materials depending on the shell temperature and chemical composition of the process gas. The pressure shell is protected by an insulation layer 2. In the case of a refractory lined reactor, the inside of the pressure shell is lined with one or more refractory layers having materials with high insulation properties as outer layers and high-temperature resistant layers as inner layer/layers. While all outer layers typically are castable, the inner layer often consists of ceramic bricks having very good temperature stability.

Inside the reactor a metallic basket 3 is introduced containing a fixed bed of catalyst 4. This gas tight basket is fixed to the reactor shell at the inlet 6. The function of the metallic basket is to contain the fixed bed of catalyst and to prevent the feed gases to enter the insulation material. Thereby, by-pass of the fixed bed and unintended reactions outside the catalyst bed are prevented. The reacted gas leaves the fixed bed through a grid 5. There may be an additional flow channel connected with the metallic basket, but it is not required. After the gas leaves the gas tight basket, the reacted gas has access to penetrate into the insulation layers as the insulation inner surface 8 is porous. When the reactor is pressurised, this may happen and it is obtained that the portion of gas, which enters to the outside of the metallic basket, only consists of reacted gas. The gas leaves the reactor through the outlet 7.

The metallic basket is only dimensioned to withstand the weight of the fixed bed and the pressure difference created by having a flow through the fixed bed. Since the material of the metallic basket needs to be high-temperature resistance and inert towards undesired reactions, the material is often a much higher alloyed material than the material used for the above mentioned pressure shell, for example Inconell 600. Alternatively, the inner surface of the basket can be coated with a ceramic material such as alumina or zirconia. This means that to obtain the cheapest possible reactor only a minimum of this material should be used. Therefore it is desirable to minimise the necessary thickness of the basket by having it to withstand only the absolute necessary pressure difference, whereas the main pressure shell is designed for the full internal pressure, however, at a much lower temperature.

In another embodiment of the invention an electric heater can be installed on the outer surface of the wall around the inlet catalyst layer. This serves to heat-up the feed gas and the catalyst to reaction temperature when a cold reactor has to be brought into operation. Additionally, the heater may also be used for obtaining the optimal reaction gas temperature during operation. The inside of the basket material at the position of the heater may additionally be coated with active catalytic material like platinum, rhodium, ruthenium or nickel to promote the partial oxidation reaction. This is to ease the initiation of the catalytic reactions when a heater is used.

The reactor is loaded with catalyst in form of particles or a monolith. The reactor is especially useful for catalytic partial oxidation of hydrocarbons, where the temperature of the reacting gas is in the range of 500° to 1300°C and most typically 900° to 1200°C.

## Claims

1. A reactor for chemical processes involving catalytic reactions of gasses at high temperatures, comprising a reactor shell (1) protected by an insulation layer (2) and having an inlet (6), an outlet (7) and
a gas impermeable basket (3) suitable for operation at elevated temperatures and containing a fixed bed of catalyst (4) for catalytic reaction of a feed gas to reacted gas, the gas impermeable basket (3) being surrounded by insulation layer (2) having a porous inner surface (8),and insulation layer (2) being surrounded by reactor shell (1) suitable for operation at elevated pressures,
**characterised in that** the gas impermeable basket (3) comprises a grid (5) for transfer of reacted gas from fixed bed of catalyst (4) to the outside of gas impermeable basket(3), an inlet channel and a wall surrounding the fixed bed of catalyst (4), and
where the inlet channel is connected to the reactor shell (1) at inlet (6) forming a gas leak tight transfer for the feed gas, wherein an electric heater is installed on the outer surface of the wall around the inlet layer of the fixed bed of catalyst (4), and wherein inner surface of the gas impermeable basket (3) at position of the electric heater is coated with a catalytic material active in partial oxidation.

2. Reactor according to claim 1, wherein the catalytic material comprises platinum, rhodium, ruthenium or nickel.

3. Reactor according to claim 1, wherein inner surface of the gas impermeable basket (3) is coated with a ceramic material such as alumina or zirconia.

4. Reactor according to claim 1, wherein catalyst in the fixed bed of catalyst (4) is in form of particles or a monolith.

5. Use of a reactor according to any of the preceding claims for catalytic partial oxidation of hydrocarbons.

6. Use of a reactor according to any of the preceding claims, wherein temperature of the reacting gases is in the range of 500° to 1300°C, preferably 900° to 1200°C.

## Patentansprüche

1. Reaktor für chemische Verfahren, die eine katalytische Reaktion von Gasen bei hohen Temperaturen beinhalten, umfassend ein Reaktorgehäuse (1), das durch eine Isolationsschicht (2) geschützt wird und einen Einlass (6), einen Auslass (7) und
eine gasundurchlässige Trommel (3), die für einen Betrieb bei hohen Temperaturen geeignet ist und ein Katalysatorfestbett (4) für die katalytische Reaktion eines eingespeisten Gases zu einem umgesetzten Gas umfasst, die gasundurchlässige Trommel (3) ist von der Isolationsschicht (2) umgeben, die eine poröse innere Oberfläche (8) besitzt, und die Isolationsschicht (2) ist vom Reaktorgehäuse (1) umgeben, das für einen Betrieb bei hohen Drücken geeignet ist,
**dadurch gekennzeichnet, dass** die gasundurchlässige Trommel (3) ein Gitternetz (5) zur Weiterleitung von umgesetztem Gas aus dem Katalysatorfestbett (4) zur Außenseite der gasundurchlässigen Trommel (3), einen Einlasskanal und eine das Katalysatorfestbett umgebende Wand umfasst, und
wobei der Einlasskanal am Eingang (6) an das Reaktorgehäuse (1) angeschlossen ist, wodurch eine gasdichte Weiterleitung des eingespeisten Gases gebildet wird, wobei eine elektrische Heizung an der äußeren Oberfläche der Wand um die Einlaufschicht des Katalysatorfestbettes (4) installiert ist, und wobei die innere Oberfläche der gasundurchlässigen Trommel (3) an der Position der elektrischen Heizung mit einem Katalysatormaterial beschichtet ist, das in der partiellen Oxidation aktiv ist.

2. Reaktor gemäß Anspruch 1, wobei das katalytische Material Platin, Rhodium, Ruthenium oder Nickel umfasst.

3. Reaktor gemäß Anspruch 1, wobei die innere Oberfläche der gasundurchlässigen Trommel (3) mit einem Keramikmaterial wie Aluminiumoxid oder Zirkonoxid beschichtet ist.

4. Reaktor gemäß Anspruch 1, bei dem der Katalysator in dem Katalysatorfestbett (4) in Form von Teilchen oder als ein Monolith vorliegt.

5. Verwendung eines Reaktors gemäß einem der vorhergehenden Ansprüche zur katalytischen partiellen Oxidation von Kohlenwasserstoffen.

6. Verwendung eines Reaktors gemäß einem der vorhergehenden Ansprüche, wobei die Temperatur der reagierenden Gase im Bereich von 500°C bis 1300°C, bevorzugt 900°C bis 1200°C liegt.

## Revendications

1. Réacteur destiné à des processus chimiques impliquant des réactions catalytiques de gaz à de hautes températures, comprenant une enveloppe de réacteur (1) protégée par une couche d'isolant (2) et comportant une entrée (6) et une sortie (7), et
un panier imperméable aux gaz (3) adaptée à une utilisation à des températures élevées et contenant un lit fixe de catalyseur (4) destiné à une réaction catalytique d'un gaz d'alimentation pour obtenir du gaz ayant réagi, le panier imperméable aux gaz (3) étant entouré d'une couche d'isolant (2) présentant une surface intérieure poreuse (8), et la couche d'isolant (2) étant entourée de l'enveloppe de réacteur (1) convenant à une utilisation à des pressions élevées,
**caractérisé en ce que** le panier imperméable aux gaz (3) comprend une grille (5) destinée au transfert du gaz ayant réagi, du lit fixe de catalyseur (4) vers l'extérieur du panier imperméable aux gaz (3), un canal d'admission et une paroi entourant le lit fixe de catalyseur (4), et
dans lequel le canal d'admission est relié à l'enveloppe de réacteur (1) au niveau de l'entrée (6) assurant un transfert étanche aux fuites de gaz du gaz d'alimentation, dans lequel un élément chauffant électrique est installé sur la surface extérieure de la paroi autour de la couche d'admission du lit fixe de catalyseur (4), et dans lequel la surface intérieure du panier imperméable aux gaz (3) à la position de l'élément chauffant électrique est revêtue d'une matière catalytique active pour une oxydation partielle.

2. Réacteur selon la revendication 1, dans lequel la matière catalytique comprend le platine, le rhodium, le ruthénium ou le nickel.

3. Réacteur selon la revendication 1, dans lequel la surface intérieure du panier imperméable aux gaz (3) est revêtue d'une matière céramique telle que l'alumine ou la zircone.

4. Réacteur selon la revendication 1, dans lequel le catalyseur dans le lit fixe de catalyseur (4) se présente sous la forme de particules ou d'un monolithe.

5. Utilisation d'un réacteur selon l'une quelconque des revendications précédentes pour l'oxydation catalytique partielle d'hydrocarbures.

6. Utilisation d'un réacteur selon l'une quelconque des revendications précédentes, dans lequel la température des gaz de réaction se situe dans la plage de 500°C à 1300°C, de préférence de 900°C à 1200°C.
